Europäisches Patentamt

European Patent Office (11) Publication number: **0 124 169**
**B1**
Office européen des brevets

(12) # EUROPEAN PATENT SPECIFICATION

(45) Date of publication of the patent specification:
**29.10.86**

(21) Application number: **84200566.2**

(22) Date of filing: **19.04.84**

(51) Int. Cl.⁴: **B 23 K 9/12,** B 65 H 51/18

(54) Device for axially feeding a wire.

(30) Priority: **27.04.83 NL 8301485**

(43) Date of publication of application:
**07.11.84 Bulletin 84/45**

(45) Publication of the grant of the patent:
**29.10.86 Bulletin 86/44**

(84) Designated Contracting States:
**CH DE FR GB IT LI NL SE**

(56) References cited:
**DE - A - 3 147 451**
**FR - A - 2 366 090**

(73) Proprietor: **N.V. Philips' Gloeilampenfabrieken,
Groenewoudseweg 1, NL-5621 BA Eindhoven (NL)**

(72) Inventor: **van Dijk, Cornelis Dionysius, c/o Int.
Octrooibureau B.V. Prof. Holstlaan 6, NL-5656 AA
Eindhoven (NL)**
Inventor: **Thiry, Michel Paul Ambroise, c/o Int.
Octrooibureau B.V. Prof. Holstlaan 6, NL-5656 AA
Eindhoven (NL)**
Inventor: **Trapman, Jan, c/o Int. Octrooibureau B.V. Prof.
Holstlaan 6, NL-5656 AA Eindhoven (NL)**

(74) Representative: **Schrijnemaekers, Hubert Joannes Maria
et al, Internationaal Octrooibureau B.V. Prof.
Holstlaan 6, NL-5656 AA Eindhoven (NL)**

## Description

The invention relates to a device for axially feeding a wire, for example, a welding wire, which device comprises a housing with a driving unit having a driving shaft, and at least two relatively reciprocable wire-drivers arranged one behind the other in the direction of movement of the wire, said wire-drivers each being connected to an associated slide of a guiding mechanism which can be driven by the driving unit.

Such a device is disclosed in Netherlands Patent Application 7 710 752. The known device comprises a housing and a driving unit having a driving shaft. A swash-plate, one side of which is constructed as a bearing surface, is rigidly connected to the driving shaft. The swash-plate is positioned so that the bearing surface is inclined to the axis of the driving shaft. The device furthermore comprises two slides each having a wire-driver and each being connected to a driving rod. One end of each driving rod is resiliently journalled in the housing and the other end bears against the bearing surface of the swash-plate. When the driving shaft rotates, the swash-plate performs a rotational movement, the relevant ends of the driving rods sliding over the bearing surface, as a result of which the driving rods are given a reciprocating movement.

A disadvantage of the known device is that in the operating condition large frictional forces occur at the areas of contact between the driving rods and the bearing surface. These frictional forces may cause detrition of both the driving rods and the swash-plate in a short period of time. Moreover, the large frictional forces cause a considerable loss of power. The known device furthermore is vulnerable to contamination in the sense that dust and metal particles which land on the bearing surface at the contact areas result in extra detrition as a result of their scouring effect. An additional disadvantage is that play easily occurs in the bearing of the driving rods wich may lead to an annoying production of noise.

It is an object of the invention to improve the device mentioned in the opening paragraph in such manner that the said disadvantages do not occur.

For that purpose, the device according to the invention is characterized in that the driving shaft of the driving unit comprises a shaft portion, the centre line of which encloses an acute angle $\propto$ with the centre line of the driving shaft, a wobble element being journalled on said shaft portion through bearing means so that said shaft portion can rotate relatively to the wobble element, and each of the slides cooperating with the wobble element by means of a hinged joint.

The hinged joints oppose rotational movement of the journalled wobble element. Hence, when the driving shaft rotates, the wobble element does not perform a rotational movement but performs a wobbling movemment. The wobbling movement is converted into a translational movement of the slides by the hinged joints, and slides in turn impart a reciprocating movement to the wire-drivers.

An advantage of the device according to the invention is that the combination of wobble element and hinged joints constitutes a transmission mechanism which can withstand high loads. A further important advantage is that hardly any loss of power occurs in the transmission mechanism. Additional advantages to be mentioned are that the device according to the invention does not produce much noise and is not vulnerable to contamination.

Before a wire can be fed by means of the device according to the invention, the wire has to be threaded through the two wire-drivers. When the driving unit is then operated, the wire will be moved axially by the wire-drivers. In operation the wire-drivers perform a reciprocating movement, at least the greater part of the movement of one wire-driver being directed oppositely to the movement of the other wire-driver. The wire is driven by the wire-drivers in their forward movement. In their return movement the wire-drivers slide over the wire. When the forward and return movements of the wire-drivers succeed each other continuously, a stepwise axial movement of the wire occurs.

The device according to the invention may be used, for example, to feed a welding wire from a storage reel to a welding point. The device is suitable for use both in automatic and in semi-automatic welding devices.

The use of the device is not restricted to welding wire. Wires having a different composition may also be fed by means of the device. Furthermore, the device is suitable not only for wires of circular cross-section but also for wires having other cross-sectional shapes. The device is furthermore suitable for moving rod-shaped articles.

A preferred embodiment of the device according to the invention is characterized in that the hinged joints are each constituted by a resiliently flexible rod, one end of which is rigidly connected to the wobble element and the other end of which is rigidly connected to one of the slides.

The flexible rods may be formed, for example, from high-speed steel for from another resilient metal, for example, spring steel or ball-bearing steel. The rods may also be formed from a non-metallic material, for example, an elastic synthetic resin, The rods are preferably secured by a suitable press fit in bores provided for this purpose in the wobble element and in the slides. Other types of connection are possible, of course, for example, welded joints and screwed joints.

An advantage of this embodiment is that the flexible rods constitute a connection between the wobble element and the slides which is free from play. Moreover, no detrition of the joint occurs, which has the advantage that the construction is durable and requires little maintenance.

Another preferred embodiment of the device according to the invention is characterized in that the centre line of the shaft portion intersects the centre line of the driving shaft.

It is generally known in mechanical engineering that devices having moving parts should be balanced so as to obtain a vibration-free operation of the device. In the device according to the invention the dynamic unbalance of the wobble element should be compensated for, for example, by providing one or more balancing weights. The construction according to this embodiment has in this respect the advantage that the wobble element can be balanced in a simple manner.

Still another preferred embodiment is characterized in that it holds for the acute angle $\propto$ that $0 < \propto \leqq 15°$.

In principle the angle $\propto$ between the centre line of the driving shaft and the centre line of the shaft portion may be between $0°$ and $90°$. In practice, in which the desired dimension of the device and the wire speeds usual in welding technology should be taken into account, it has been found that the device according to the invention operates very favourably with an angle $\propto$ which is between $0°$ and $15°$.

A favourable preferred embodiment of the device according to the invention is characterized in that the guiding mechanism comprises at least two pairs of parallel leaf springs which are positioned transversely of the direction of movement of the wire, said leaf springs cooperating one pair with each slide, and each being connected at one end to the housing and at the other end to the slide.

An advantage of this embodiment is that the guiding mechanism of the drivers has a simple construction and a long life. This guiding mechanism furthermore permits a compact construction of the device.

Embodiments of the device according to the invention will be described in greater detail hereinafter with reference to the drawings, in which

Fig. 1 is a diagrammatic axial sectional view of a device according to the invention,

Fig. 2 is an axial sectional view of an embodiment of one of the wire-drivers of the device shown in Fig. 1,

Fig. 3 is a sectional view taken on the line III-III in Fig. 2,

Fig. 4 is a part-sectional plan view of an embodiment of the device according to the invention,

Fig. 5 is a side elevation, partly in section, of the device shown in Fig. 4, the section being taken on the line V-V in Fig. 4, and

Fig. 6 is an end elevation, partly in section, of the device shown in Fig. 4, the section being taken on the line VI-VI in Fig. 4.

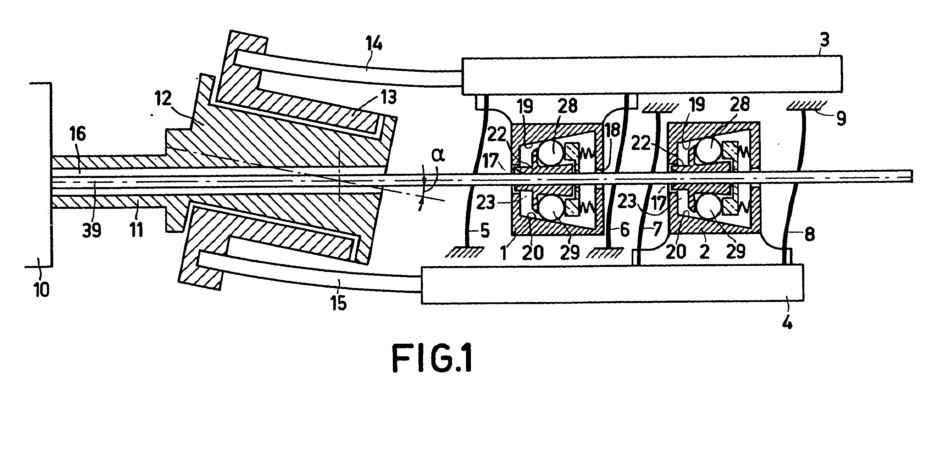

The device according to the invention shown in Fig. 1 comprises two identical wire-drivers 1 and 2 which are connected to slides 3 and 4, respectively. The slides 3 and 4 are guided by a pair of leaf springs 5, 6 and 7, 8, respectively, of a guiding mechanism. The leaf springs 5, 6, 7 and 8 are connected to a housing 9. The device furthermore comprises a driving unit 10 having a driving shaft. The driving shaft 11 comprises a shaft portion 12, the centre line of which encloses an acute angle $\propto$ with the centre line of the driving shaft. The angle $\propto$ preferably is $\leqq 15°$. A wobble element 13 to which hinged joints 14 and 15 are connected at diametrically opposed points is journalled on the shaft portion 12 so that the latter can rotate relatively to the wobble element. The hinged joints 14 and 15 are also connected to the slides 3 and 4, respectively. A box 10 extends through the driving shaft 11 and through the shaft portion 12.

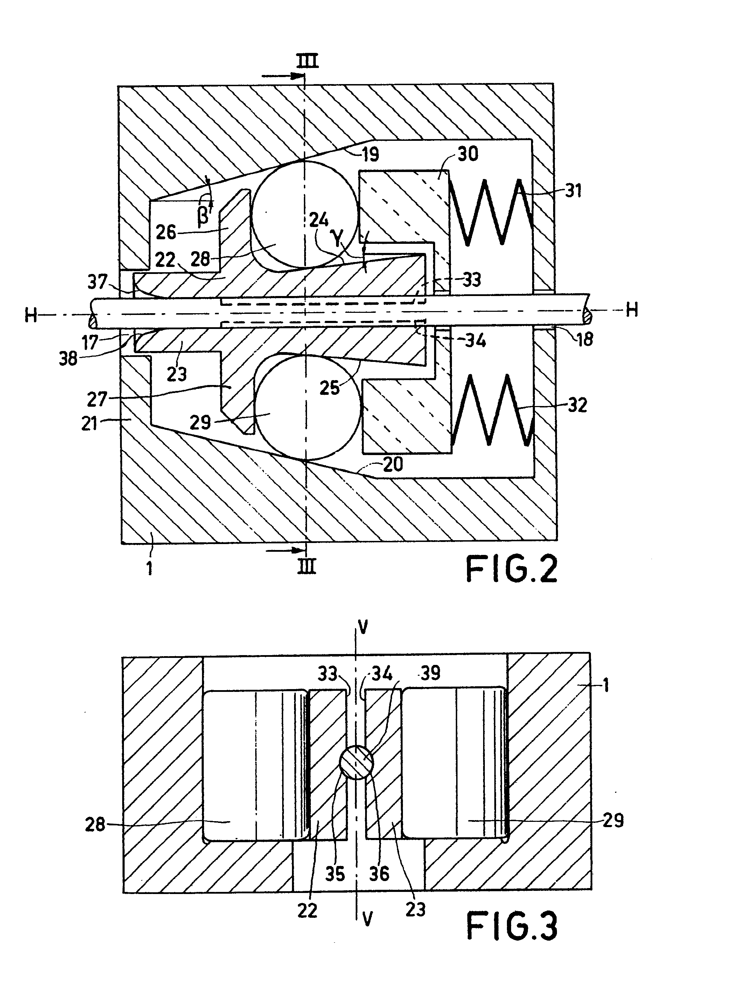

The construction of the identical wire-drivers 1 and 2 will be described in greater detail with reference to Figures 2 and 3 which show the wire-driver 1 on an enlarged scale. The wire-driver 1 comprises a first aperture 17 and a second aperture 18 and has a plane of symmetry which passes through the two apertures 17 and 18 and extends perpendicularly to the plane of the drawing.

In Figures 2 and 3 the plane of symmetry is represented by the line H-H and V-V.

The wire-driver 1 has inclined walls 19 and 20, respectively, on opposite sides of the plane of symmetry. The inclined walls 19 and 20 lie in planes wherein each enclose an acute angle $\beta$ with the plane of symmetry. A chamber 21 in which wedge-shaped grippers 22 and 23 are provided on opposite sides of the plane of symmetry extends between the walls 19 and 20. The grippers 22 and 23 comprise flanges 26 and 27 on their sides 24 and 25, respectively, which are remote from the plane of symmetry. The sides 24 and 25 lie in planes which each enclose a small angle $\gamma$ with the plane of symmetry.

Rolling elements 28 and 29 on which springs 31 and 32 act via a pressure member 30 are also accommodated in the chamber 21. The rolling element 28 cooperates on the one hand with the inclined wall 19 and on the other hand with the side 24 and the flange 26 of the gripper 22. Similarly, the rolling element 29 cooperates with the inclined wall 20 and with the side 25 and the flange 27 of the gripper 23.

The flanges 26 and 27 should preferably have a shape, for example the shape shown in Fig. 2, such that the area of contact with the rolling elements 28 and 29 is small.

The sides 33 and 34 of the grippers 22 and 23 which face the plane of symmetry preferably comprise channel-like recesses 35 and 36 which are widened at their ends 37 and 38, respectively, which are nearer the first aperture 17.

The wire-drivers 1 and 2 are so positioned relative to each other that the first aperture 17 of the wire-drivers 2 is disposed opposite the second aperture 18 of the wire-driver 1, as is shown in Fig. 1.

In the operating condition of the above device a wire, indicated by 39, is threaded through the wire-drivers 1 and 2 via the bore 16 and the apertures 17. When the driving shaft 11 rotates, the wobble element 13 performs a wobbling, non-rotating movement which is converted into reciprocating movements of the slides 3 and 4 by the hinged joints 14 and 15 such that the wire-drivers 1 and 2 are moved in opposite directions simultaneously. When the wire-driver 1 performs a forward movement, i.e., a movement in which the wire-driver moves away from the driving unit 10, the rolling elements 28 and 29 in wire-driver 1 roll on the inclined walls 19 and 20 in a direction such that they move towards each other. The grippers 22 and 23 are consequently urged against the wire 39 which is thereby gripped and pulled along with the wire-driver 1. In the meantime the wire-driver 2 moves in the opposite direction, in which movement the grippers 22 and 23 of the wire-driver 2 slide back along the wire. Upon termination of the forward movement of wire-driver 1, wire-driver 2 begins its forward movement, in which the wire is pulled along with the wire-driver 2 in the same manner as described for the wire-driver 1. In the meantime the wire-driver 1 performs its return movement, in which the grippers 22 and 23 of wire-driver 1 slide back along the wire. When the movements of the two wire-drivers 1 and 2 succeed each other continuously, the wire is moved in the axial direction in a pulsatory manner.

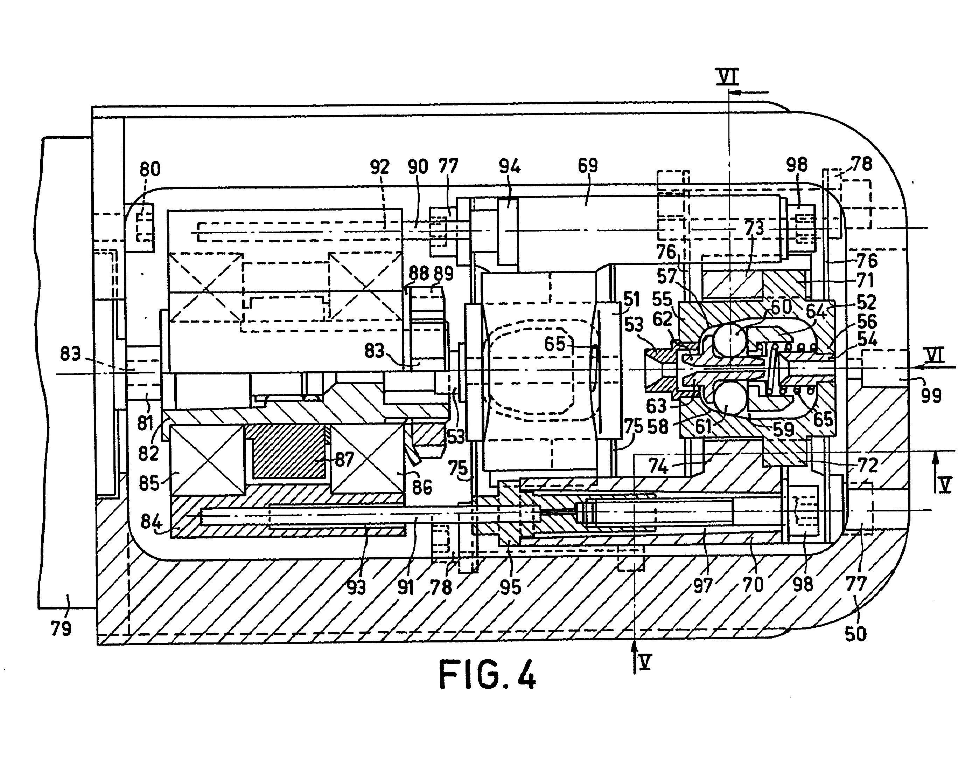

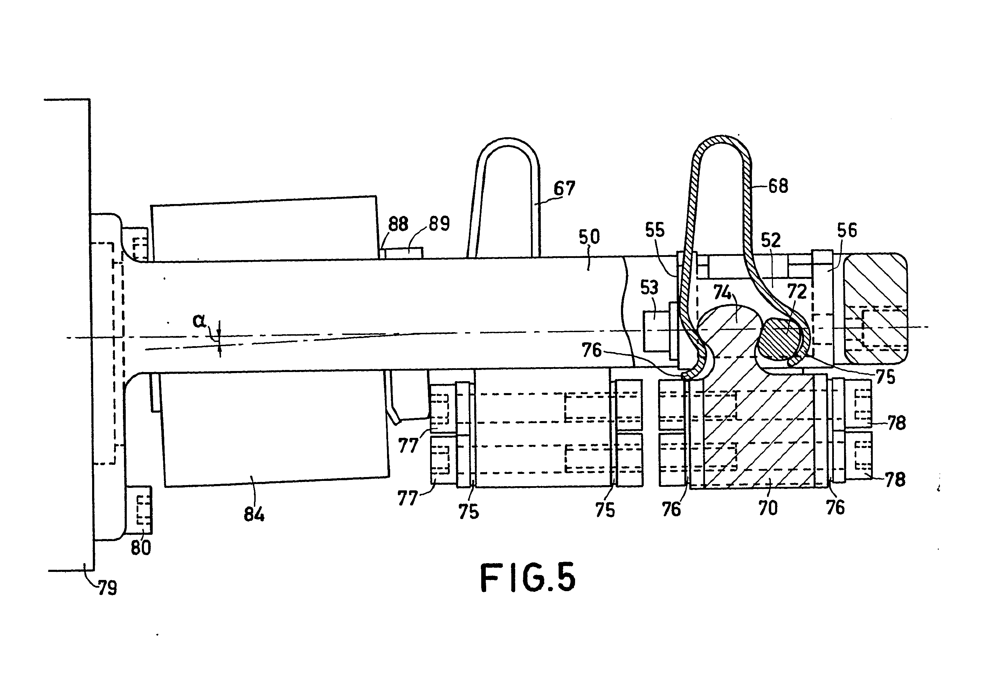

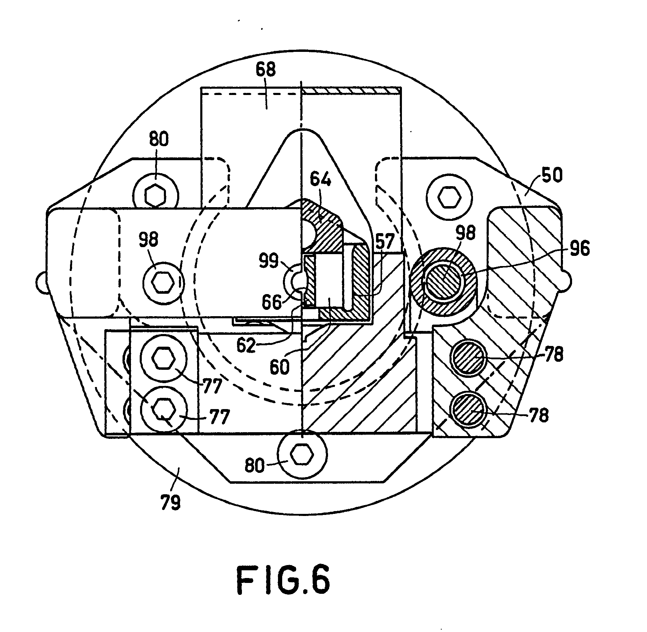

A preferred embodiment of the device according to the invention is shown in detail in Figures 4, 5 and 6. The embodiment comprises a housing 50 having two drivable wire-drivers 51 and 52 arranged one behind the other. The wire-drivers 51 and 52, which are identical, have the same construction in principle as that described above with reference to Figures 1, 2 and 3. Therefore, only the more important elements of the wire-drivers 51 and 52 will be indicated. The wire-drivers 51 and 52 each comprise first and second apertures which are constructed as sleeves 53 and 54, respectively. Sleeve 53 is disposed in a wall 55 and sleeve 54 in the opposite wall 56. Both wire-drivers 51 and 52 have two inclined walls 57 and 58, between which a chamber 59 extends. Two cylindrical rolling elements 60 and 61, two grippers 62 and 63, a pressure member 64 and a spring 65 are accommodated in the chamber 59. The grippers 62 and 63 extend partly into the sleeve 53 and in their sides which face one another are each formed with a channel-like recess 66 which widens in a semi-funnel-like manner at the end which is nearer the sleeve 53.

The wire-drivers 51 and 52 are connected to slides 69 and 70 respectively by bent spring clips or clamps 67 and 68. For that purpose the wire-drivers comprise two projections 71 and 72 and the slides each comprise two projections 73 and 74. The spring clips 67 and 68 each have two hook-like ends 75 and 76, between which are clamped the pair of projections 71, 73 and the pair of projections 72, 74, the two projections of each pair engaging each other.

The slides 69 and 70 are connected to the housing 50 by two pairs of leaf springs 75 and 76, respectively, made of stainless steel. The leaf springs 75 and 76 are connected to the slides 69 and 70 by bolts connections 77 and to the housing 50 by bolts 78.

The wire-drivers 51 and 52 are so positioned relatively to each other that the sleeves 53 and 54 of the two wire-drivers 51 and 52 are coaxial with each other.

The device furthermore comprises an electric motor unit 79 which is connected to the housing 50 by bolts 80. The motor unit 79 comprises a driving shaft 81 which is in axial alignment with the sleeves 53 and 54 of the wire-drivers 51 and 52. A shaft portion 82, the centre line of which intersects the centre line of the driving shaft 81 at an angle of 2°, is fixed on the driving shaft 81. A bore 83 extends through the driving shaft 81 and the shaft portion 82. A wobble element 84 is journalled on the shaft portion 82 through bearing means comprising two prestressed groove ball-bearings 85 and 86, between which a balancing weight 87 is provided. Of course, other types of bearings may alternatively be used, for example, angular contact bearings and sliding bearings. The bearings are sealed by a sealing ring 88 which is held in place by a locking nut 89 screwed on the shaft portion 82.

Two resiliently flexible rods 90 and 91 of high-speed connected at one end of the wobble element 84 at diametrically opposed points thereon and at the other end to the slides 69 and 70, respectively, form hinged joints between the wobble element 84 and the slides 69 and 70. The rods 90 and 91 are secured with a force fit in bores 92 and 93, respectively, in the wobble element 84. The rods 90 and 91 are similarly secured to connection elements 94 and 95, respectively, which connection elements are received in axially extending bores 96 and 97 in the slides 69 and 70 and are fixed therein by bolts 98 which are screwed into the connection elements 94 and 95.

The wire leaves the housing 50 through an aperture 99 provided in an end wall of the housing opposite the wire-driver 52.

This embodiment of the device according to the invention is suitable for feeding wires of different diameters between 0.8 and 1.6 mm without any alteration of the device being necessary.

At the angle $\propto$ of 2° already mentioned, each wire-driver 51 and 52 travels 1.5 mm in each forward movement and in each return movement. Usually the number of revolutions of the driving shaft 81 will be in the range from 0 - 100 per second.

Reference is made to the EP-A-124 170 specification in which subject matter described in the present Application is claimed.

## Claims

1. A device for axially feeding a wire (39), which device comprises a housing (9) with a driving unit having a driving shaft (11), and at least two relatively reciprocable wire-drivers (1, 2) arranged one behind the other in the direction of movement of the wire, said wire-drivers each being connected to an associated slide (3, 4) of a guiding mechanism which can be driven by the driving unit, characterized in that the driving shaft (11) of the driving unit comprises a shaft portion (12), the centre line of which encloses an acute angle $\propto$ with the centre line of the driving shaft, a wobble element (13) being journalled on said shaft portion through bearing means so that said shaft portion can rotate relatively to the wobble element (13), and each of the slides (3, 4) cooperating with the wobble element by means of a hinged joint (14, 15).

2. A device as claimed in Claim 1, characterized in that the hinged joints (14, 15) are each formed by a resiliently flexible rod (90, 91) which is rigidly connected at one end to the wobble element and at the other end to one of the slides.

3. A device as claimed in Claim 1 or 2, characterized in that the centre line of the shaft portion (12) intersects the centre line of the driving shaft.

4. A device as claimed in Claim 1, 2 or 3, characterized in that it holds for the acute angle $\propto$ that $0 < \propto \leq 15°$.

5. A device as claimed in any of the preceding Claims, characterized in that the guiding mechanism comprises at least two pairs of parallel leaf springs (75, 76) which are positioned transversely of the direction of movement of the wire, said leaf springs cooperating one pair with each slide and each being connected at one end to the housing and at the other end to the respective slide.

## Patentansprüche

1. Vorrichtung zum axialen Vorschieben eines Drahtes (39) mit einem Gehäuse (9) mit einer Antriebseinheit mit einer Antriebsachse (11) und mit wenigstens zwei relativ zueinander hin- und herbeweglichen in der Bewegungsrichtung des Drahtes hintereinanderliegenden Drahtmitnehmern (1, 2), wobei die genannten Drahtmitnehmer mit je einem zugeordneten Schlitten (3, 4) eines Führungsmechanismus verbunden sind, der von der Antriebseinheit angetrieben werden kann, dadurch gekennzeichnet, dass die Antriebsachse (11) der Antriebseinheit einen Achsenteil (12) aufweist, dessen Mittellinie mit der Mittellinie der Antriebsachse (11) einen scharfen Winkel α einschliesst, wobei auf dem genannten Achsenteil durch Lagermittel ein Kippelement (13) angeordnet ist, so dass der genannte Achsenteil gegenüber dem Kippelement (13) drehen kann und wobei jeder der Schlitten (3, 4) mittels einer Gelenkverbindung (14, 15) mit dem Kippelement zusammenarbeitet.

2. Vorrichtung nach Anspruch 1, dadurch gekennzeichnet, dass die Gelenkverbindungen (14, 15) durch je einen biegbaren Federstab (90, 91) gebildet sind, der an nur einem Ende starr mit dem Kippelement und am anderen Ende mit einem der Schlitten verbunden ist.

3. Vorrichtung nach Anspruch 1 oder 2, dadurch gekennzeichnet, dass die Mittellinie des Achsenteils (12) die Mittellinie der Antriebsachse schneidet.

4. Vorrichtung nach Anspruch 1, 2 oder 3, dadurch gekennzeichnet, dass für den scharfen Winkel α gilt, dass $0 < α < 15°$ ist.

5. Vorrichtung nach einem der vorstehenden Ansprüche, dadurch gekennzeichnet, dass der Führungsmechanismus wenigstens zwei Paare paralleler Blattfedern (75, 76) aufweist, die quer zu der Bewegungsrichtung des Drahtes angeordnet sind, wobei die genannten Blattfedern paarweise mit jedem Schlitten zusammenarbeiten und wobei jede Blattfeder an einem Ende mit dem Gehäuse und am anderen Ende mit dem betreffenden Schlitten verbunden ist.

## Revendications

1. Dispositif pour l'avancement axial d'un fil (39), dispositif qui est muni d'un boîtier (9) contenant une unité d'entraînement comportant un arbre d'entraînement (11) et d'au moins deux organes d'entraînement de fil (1, 2) animés de mouvements relatifs, disposés l'un derrière l'autre dans la direction de déplacement du fil, lesdits organes d'entraînement de fil étant reliés chacun à un chariot (3, 4) correspondant d'un mécanisme de guidage, qui peut être entraîné par l'unité d'entraînement, caractérisé en ce que l'arbre d'entraînement (11) de l'unité d'entraînement comporte une partie d'arbre (12), dont l'axe géométrique fait un angle aigu α avec l'axe géométrique de l'arbre d'entraînement (11), un élément oscillant (13) étant monté sur ladite partie d'arbre à l'aide de moyens de support de façon que ladite partie d'arbre puisse tourner par rapport à l'élément oscillant (13), et chacun des chariots (3, 4) coopérant avec l'élément oscillant à l'aide d'une articulation (14, 15).

2. Dispositif selon la revendication 1, caractérisé en ce que les articulations (14, 15) sont formées chacune par une tige élastiquement flexible (90, 91), qui est reliée rigidement à une extrémité de l'élément oscillant et à l'autre extrémité à l'un des chariots.

3. Dispositif selon la revendication 1 ou 2, caractérisé en ce que l'axe géométrique de la partie d'arbre (12) coupe l'axe géométrique de l'arbre d'entraînement.

4. Dispositif selon la revendication 1, 2 ou 3, caractérisé en ce que pour l'angle aigu α il s'applique que $0 < α ⩽ 15°$.

5. Dispositif selon l'une des revendications précédentes, caractérisé en ce que le mécanisme de guidage comporte au moins deux paires de ressort à lames parallèles (75, 76), qui sont positionnés transversalement à la direction de déplacement du fil, une paire desdits ressorts à lames coopérant avec chacun desdits chariots et une extrémité de ressorts à lames étant fixée au boîtier, l'autre au chariot.

FIG.1

FIG.2

FIG.3

FIG. 4

FIG.5

FIG.6